# EUROPEAN PATENT APPLICATION

(11) **EP 3 734 830 A1**
(43) Date of publication of application: **04.11.2020**
(21) Application number: 19172603.3
(22) Date of filing: 03.05.2019
(51) Int. Cl.: H02N 1/04

(54) **METHOD FOR THE MANUFACTURE OF A TRIBOELECTRIC DEVICE**

(71) Applicant: SABIC Global Technologies B.V., 4612 PX Bergen op Zoom (NL)
(72) Inventor: Amit Kumar, Tevtia, 23955-6900 Thuwal (SA); Sahel S., Alakel, 23955-6900 Thuwal (SA); Mohammed A., Tayeb, 23955-6900 Thuwal (SA)
(74) Representative: Balder IP Law, S.L.

(57) **Abstract**

A method for the manufacture of a triboelectric device includes spray coating a solution including a triboelectrically active polymer on an electrode to form a triboelectric layer disposed on at least a portion of the electrode. The triboelectrically active polymer is present in the solution in an amount of 0.05 to 1 weight percent, based on the total weight of the solution. Spray coating the solution includes at least one pass over the electrode at a deposition rate of 0.05 to 0.25 milliliters per minute. A triboelectric device is also described.

## Description

### BACKGROUND

Electronic devices, particularly consumer electronic devices, interact with users of the devices by receiving input from the user and providing output to the user. Traditional forms of input can include keyboard and mouse devices, while newer devices include touch screen displays. Though the traditional means of user interaction are well-suited for some applications, there remains a need for low cost, low power, and small size devices to enable user interaction. The traditional keyboards and mice tend to be large, and touch screen devices generally consume large amounts of power.

A triboelectric-based sensor can be used to receive touch-based input from a user to control electronic devices. Thus, next-generation devices can use triboelectric sensors to interact with users. A triboelectric sensor can determine the amount of force applied to the sensor, and translate that applied force to an electrical signal. Current manufacturing techniques for triboelectric sensors rely on complicated processes and thus it can be difficult to translate to high volume manufacturing.

Accordingly, there remains a continuing need for improved processes for manufacturing triboelectric devices. It would be particularly advantageous to provide a process allowing for low temperature deposition of a triboelectric active film, as well as the conductive electrode material.

### SUMMARY

A method for the manufacture of a triboelectric device comprises spray-coating a solution comprising a triboelectrically active polymer on an electrode to form a triboelectric layer disposed on at least a portion of the electrode, wherein the triboelectrically active polymer is present in the solution in an amount of 0.05 to 1.5 weight percent, based on the total weight of the solution; and the spray-coating comprises at least 1 pass over the electrode at a deposition rate of the solution of 0.05 to 0.25 milliliters per minute.

A triboelectric device made by the method disclosed herein is also described.

The above described and other features are exemplified by the following figures and detailed description.

### BRIEF DESCRIPTION OF THE DRAWINGS

The following figures represent exemplary embodiments.
FIG. 1 is a schematic illustration of a spray coating apparatus with a horizontally-positioned nozzle.
FIG. 2 is a schematic illustration of a spray coating apparatus with a vertically-positioned nozzle.
FIG. 3 is a schematic illustration of an exemplary nozzle path for spray coating.
FIG. 4 shows average output voltages for spin- and spray-coated triboelectric thin films at various thicknesses.
FIG. 5 shows the relationship between surface roughness of poly(vinylidene fluoride-co-trifluoroethylene) (PVDF-TrFE) films and average voltage output using the spray-coating technique.
FIG. 6 shows the relationship between average voltage and film thickness for cross-linked polycarbonate functionalized with fluorinated polyhedral oligomeric silsesquioxane (XPC-FPOSS).

### DETAILED DESCRIPTION

The present inventors have advantageously discovered a new process for manufacturing triboelectric devices whereby surface morphology of the triboelectric active layer can be controlled using spray coating to enhance the performance. Moreover, the present inventors have further found that the conductive electrode can be prepared by spray coating in the desired pattern. Thus the process of the present disclosure by spray coating provides an efficient, scalable, high-throughput, and low-cost technique for triboelectric device fabrication.

Accordingly, an aspect of the present disclosure is a method for the manufacture of a triboelectric device. The method comprises spray coating a solution comprising a triboelectrically active polymer on an electrode to form a triboelectric layer disposed on at least a portion of the electrode.

Spray coating of the solution comprises at least one pass over the electrode. For example, spray coating the solution can include 1 to 30 passes, or 1 to 25 passes, or 5 to 25 passes, or 15 to 25 passes over the electrode. The spray coating of the solution is at a deposition rate of 0.05 to 0.25 milliliters per minute. In an aspect, the spray coating can utilize an ultra-sonicated nozzle.

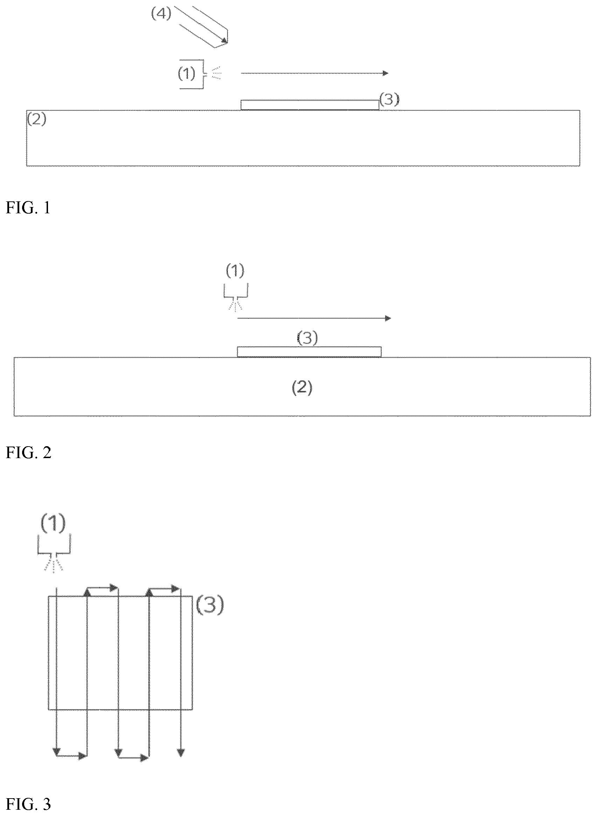

In an aspect, the spray coating can utilize an apparatus as shown in FIG. 1. FIG. 1 shows a spray coating apparatus using a horizontally positioned nozzle. A nozzle (1) spray coats the solution onto a substrate (3). The substrate (3) is positioned on a hot plate (2) in order to continuously heat the substrate. An air nozzle (4) can be used to force the solution downwards onto the substrate (3). The nozzle moves across the substrate, for example, in the direction indicated by the arrow.

Alternatively, a vertically positioned nozzle, as illustrated in FIG. 2, can eliminate the need for an air nozzle, and the solution instead can be assisted by gravity to form the desired film on the substrate. In FIG. 2, a nozzle (1) is positioned vertically to coat the solution onto the substrate (3), which is placed on a hot plate (2) for continuous heating. The nozzle moves across the substrate, for example, in the direction indicated by the arrow.

FIG. 3 is a top-down view of the apparatus of either FIG. 1 or FIG. 2, and illustrates an exemplary pathway for a vertically or horizontally positioned nozzle (1) in a spray coating process for substrate (3). The vertical arrows illustrate the path the nozzle takes across the substrate, and the horizontal arrows show the distance between each run. The path of each run and the distance between each run can be controlled.

The solution to be spray coated comprises a triboelectrically active polymer. As used herein, the term "triboelectrically active polymer" refers to a polymer capable of triboelectric charging. Triboelectric charging is a type of contact electrification whereby a material can become electrically charged after contacting and being separated from a different material.

In an aspect, the triboelectrically active polymer can be poly(vinylidene fluoride), a copolymer of poly(vinylidene fluoride), poly(dimethyl siloxane), poly(methyl (meth)acrylate), polyvinylidene chloride, poly(tetrafluoroethylene), a fluorinated copolymer of poly(methyl (meth)acrylate), poly(p-xylylene), a fluorinated polyhedral oligomeric silsesquioxane-functionalized polycarbonate, or a combination thereof. In an aspect, the triboelectrically active polymer can be poly(vinylidene fluoride), poly(vinylidene fluoride-co-trifluoroethylene), a fluorinated polyhedral oligomeric silsesquioxane-functionalized polycarbonate, or a combination thereof. In a specific aspect, the triboelectrically active polymer can be poly(vinylidene fluoride-co-trifluoroethylene), a fluorinated polyhedral oligomeric silsesquioxane-functionalized polycarbonate, or a combination thereof. The fluorinated polyhedral oligomeric silsesquioxane-functionalized polycarbonate can comprise a crosslinked polycarbonate, for example as described in U.S. Patent Publication Nos. 2015/0232614 and 2015/0315336.

The triboelectrically active polymer is present in the solution in an amount of 0.05 to 1.5 weight percent, based on the total weight of the solution. Within this range, the triboelectrically active polymer can be present in an amount of 0.05 to 1 weight percent, 0.1 to 1 weight percent, 0.2 to 1 weight percent, or 0.3 to 1 weight percent, or 0.3 to 0.7 weight percent each based on the total weight of the solution. Concentrations of 1 weight percent or less are generally preferred due to the relatively small inner diameter of the spray coating system. Higher concentrations can coagulate and result in non-uniform films. This effect could be limited or avoided upon selection of a larger inner diameter. Exemplary inner diameters preferable for use when the triboelectrically active polymer is present in the concentrations disclosed herein can include 0.5 to 3 micrometers.

In addition to the triboelectrically active polymer, the solution further comprises a solvent. The solvent can generally be any solvent that is effective to dissolve the triboelectrically active polymer. In an aspect, the solvent can be an organic solvent, preferably a polar organic solvent. For example, the solvent can be cyclohexanone, tetrahydrofuran, dimethyl formamide, N-methyl pyrrolidone, methyl ethyl ketone, dimethyl sulfoxide, and the like, or a combination thereof. In an aspect, the solvent can be cyclohexanone, tetrahydrofuran, or a combination thereof.

The triboelectric layer is disposed on at least a portion of the electrode. In an aspect, the triboelectric layer is disposed over an entire side of the electrode. In an aspect, the triboelectric layer can comprise a first triboelectric layer than has been deposited on the electrode by spin coating, doctor blade coating, slot die coating, or the like, and a second triboelectric layer that has been deposited on top of the first coated layer.

The electrode can comprise a substrate and an electrical conductor disposed on the substrate. Suitable substrates can include, for example, glass, polymer films, or nonconductive metal oxide layers. In an aspect the substrate is a glass substrate. In an aspect, the substrate is a polymer film, preferably a polycarbonate film, a polyetherimide film, a polyester film (e.g., polyethylene terephthalate, polyethylene naphthalate, and the like), a polyimide film, a polyolefin film, polyether ether ketone film and the like, or a combination thereof. The electrical conductor disposed on the substrate to form the electrode can include, for example, indium tin oxide, electrically conductive metal nanowires (e.g., silver nanowires, gold nanowires, copper nanowires, nickel nanowires, gold-plated silver nanowires, platinum nanowires, palladium nanowires, aluminum nanowires, alloys thereof, and the like, or a combination thereof), polymeric (semi)conductive layers (e.g., PEDOT:PSS, P3HT, and the like), electrically conductive nanoparticles (e.g., silver nanoparticles, gold nanoparticles, copper nanoparticles, nickel nanoparticles, gold-plated silver nanoparticles, platinum nanoparticles, palladium nanoparticles, aluminum nanoparticles, silicon nanoparticles, graphite nanoparticles, alloys thereof, and the like, or a combination thereof), and electrically conductive nanomeshes (e.g., sheets of nanowires which can include, but are not limited to, those described above). In an aspect, the electrical conductor comprises indium tin oxide or silver nanowires. In a specific aspect, the electrical conductor comprises silver nanowires.

The electrode can be a patterned electrode (e.g., having an electrical conductor patterned on the surface of the substrate) or can be a continuous electrode (e.g., having a continuous film comprising the electrical conductor on the surface of the substrate). In an aspect, the electrode can preferably be a patterned electrode, comprising a patterned substrate wherein the electrical conductor is disposed on the surface of the substrate in a pre-determined pattern.

In a particularly advantageous aspect, the present inventors have unexpectedly discovered that the electrical conductor can be spray coated onto the surface of the substrate to provide the patterned the electrode. Thus the process of the present disclosure can include a fully solution-processed method for preparing a triboelectric device. Accordingly, in an aspect, the method can further comprise spray coating the conductor onto the substrate to form a pattern. The spray coating of the conductor can occur prior to or after the spray coating of the solution comprising the triboelectrically active polymer. The coated triboelectric polymer and conductive layers can be peeled off the substrate to provide a freestanding triboelectric device, if desired.

A triboelectric device made by the method described herein represents another aspect of the present disclosure. The triboelectric device comprises a triboelectric layer disposed on at least a portion of an electrode, wherein the triboelectric layer and the electrode can be as described above. The triboelectric layer can have an average thickness of 1 to 150 micrometers, or 20 to 140 micrometers. The triboelectric layer can have an average surface roughness of 0.1 to 2 micrometers. The triboelectric device can have an average output voltage of 0.5 to 2.5 volts, or 1 to 2 volts. In an aspect, particularly when patterned electrodes are utilized, the device can have an average output voltage of 3 to 7 volts. Exemplary methods for determining layer thickness, surface roughness, and device output are further described in the working examples below.

Accordingly, the present disclosure provides a facile, all-solution process for preparing triboelectric devices based on a spray-coating technique. Using the process disclosed herein, thin, flexible devices can be obtained having continuous, pin-hole free triboelectric layers with tunable film thicknesses and surface roughnesses. The process can advantageously be further simplified by also spray coating the electrode active material. Therefore, a substantial improvement is provided by the process of the present disclosure.

This disclosure is further illustrated by the following examples, which are nonlimiting.

### EXAMPLES

Materials used for the following Examples are summarized in Table 1.

**Table 1**

| Component | Description | Supplier |
|---|---|---|
| PVDF-TrFE | Poly(vinylidene fluoride-trifluoroethylene) | Arkema |
| XPC-FPOSS | Photo-active polycarbonate with fluorinated polysilsesquioxane, synthesized as described in preparative example 1 | |
| AgNW | Silver nanowires having an average diameter of 115 nm and a length of 20-30 µm | Sigma Aldrich |
| Cyclohexanone | Cyclohexanone, CAS Reg. No. 108-94-1 | Sigma Aldrich |
| Tetrahydrofuran | Tetrahydrofuran, CAS Reg. No. 109-99-9 | Sigma Aldrich |

### Test methods

Optical transmittance of the electrodes was determined according to ASTM D1003-13.

Sheet resistance of the electrodes was determined according to ASTM F390-11 using a four-point probe technique for measuring resistivity. A one-square inch sample was used to measure the resistivity at room temperature and three data points were taken to determine an average.

Surface roughness and the arithmetic average of the roughness profile (Ra) of the triboelectric polymer deposited onto the electrodes were determined using a stylus profiler.

Triboelectric energy output was determined using an electrometer system available from Keithley Hardwares.

### Preparative Example 1. Synthesis of XPC-FPOSS.

Photo-active polycarbonate including repeating units derived from bisphenol-A and phosgene, and end cap groups derived from monohydroxybenzophenone was prepared as described in US 2015/0315336. The photo-active polycarbonate (0.05 to 1.5 weight percent) was dissolved in an organic solvent (DMF, cyclohexanone, or THF), and fluorinated polyhedral oligomeric silsesquioxane (20 weight percent, with respect to the photo-active polycarbonate) was added. The mixture was continuously stirred at 200 rpm and at a temperature of 50°C for 3-5 hours, until full dissolution was observed. This solution was used directly for the spray coating procedure described below for forming the triboelectric layer.

### Example 1. Comparison of Application Methods.

Pre-patterned electrodes were prepared on a flexible polycarbonate or polyetherimide substrate. A suspension of AgNWs was prepared in methanol (0.25 weight percent). A 1-inch x 1-inch mask with 1 millimeter spacing and a single electrode size of 0.5 x 20 millimeters was prepared. The mask was adhered onto the flexible substrate and the AgNW suspension was spray-coated using an ultrasonic spray-coater. This technique was used to prepare a pre-patterned electrode at room temperature without affecting the substrate properties. Furthermore, the electrode was transparent, exhibiting an optical transmittance of greater than 80% and a sheet resistance of less than 50 Ω per square inch.

A solution of PVDF-TrFE (16 weight percent) in dimethylformamide (DMF) was spin-coated at 2000 rpm on top of the pre-patterned electrodes to fabricate the triboelectric devices. The PVDF-TrFE coated directly on ITO-glass exhibited the smoothest surface, with an average roughness of less than 40 nanometers.

When the PVDF-TrFE was spray coated on the pre-patterned electrodes, the polyetherimide substrate exhibited an average surface roughness of 600 nanometers. Coatings formed on pre-patterned electrodes on polycarbonate and polypropylene substrates exhibited lower average surface roughnesses of 480 and 400 nanometers, respectively.

### Example 2. Comparison of Pre-patterned vs. Continuous electrodes.

The triboelectric output voltage for the pre-patterned electrodes was also tested. For comparison and illustration of the effect of the patterned surface, a continuous conductive electrode was fabricated using AgNWs. Using the same spin rate (i.e., 2000 rpm), a triboelectric active layer was deposited over the continuous electrode. The triboelectric output voltage for a continuous ITO-glass coated substrate was observed to be 3.2 volts, for a continuous AgNWs electrode on polyetherimide 1.5 volt, and for a continuous AgNWs electrode 1.8 volts. The triboelectric output voltage for the pre-patterned electrodes of Example 1 were 5.1 volts (on polyetherimide) and 3.8 volts (on polycarbonate).

These results show that use of the pre-patterned electrode enhances the surface roughness, which helps to increase the surface area of the triboelectric layer and in turn enhance the overall triboelectric output voltage. It is therefore clearly shown that the pre-patterned electrode allows for a desired form factor to be achieved with a high triboelectric performance. Stated another way, it has been shown that the triboelectric layer can take any desired shape due to its high flowability.

### Example 3. Optimization of solution deposition method by spray coating

Extensive research was conducted to optimize the spray-coating process in order to obtain smooth, continuous films. Factors considered included polymer concentration, solvent identity, substrate composition, number of spray passes, flow rate of the polymer solution, temperature of the substrate, the distance between the spray nozzle and the substrate, the speed of the moving nozzle during spraying, and the air pressure. Each of these parameters was tested to identify optimum spraying conditions at which the desired film thickness, roughness, and pinhole depth were obtained.

A 1 weight percent solution of PVDF-TrFE in THF was spray-coated on a continuous ITO-coated glass substrate with a deposition rate of 0.25 milliliters per minute and a substrate temperature of 54°C. After coating, the resulting film was annealed at a temperature of 55°C for 1.5 hours. A 0.5 weight percent solution of PVDF-TrFE in cyclohexanone was also spray-coated with a deposition rate of 0.1 milliliters per minute and a substrate temperature of 35°C. The film was also annealed at 55°C for 1.5 hours. The sample spray-coated from cyclohexanone was found to provide a desirable combination of film thickness and smoothness. It was also noted that the film thickness was significantly larger than the maximum peak height, and the peaks themselves were nearly constant regardless of the film's thickness. This result shows that the films produced are continuous and uniform.

For the spray-coating method, films were prepared using different numbers of passes (15, 20 and 25 passes) to control the thickness. Thin films obtained using 25 passes showed more control over surface roughness. Comparing the spray-coating and spin-coating methods, thin films prepared by spray-coating provided more control over roughness and thickness in general. Thin films formed from low number of passes with the spray-coating method were observed to be better than films formed at a higher spin rate. Roughness is an important parameter for thin film applications. At 15 passes using the spray-coating method, the roughness was 1.052 µm, whereas 20 and 25 passes provided films having roughness reduced to 0.860 µm and 0.674 µm, respectively.

### Example 4. Comparison of spin-coating, spray-coating, and spray-over-spin-coating

The same materials as were used in Example 3 were used to obtain a triboelectric active film by spin-coating onto an ITO/glass substrate at spin rates of 500, 1000, 1500, 2000 and 2500 rpm. The films processed below spin rates of 2000 rpm were very rough. However, thin films processed at spin rate of 2500 rpm exhibited smoother surfaces, with lower roughness. Thin films processed at 500 rpm showed a maximum height 0.41 µm and lowest valley depth of -0.28 µm, whereas thin film processed at spin rate 2500 rpm showed a maximum height of 0.16 µm and lowest valley depth of -0.26 µm. Thus the film spin-coated at 2500 rpm is more flat compare to other spin-coated films. The thin film obtained at 500 rpm spin rate had a roughness of 2.48 µm, whereas 2000 rpm spin-coated thin film showed a thickness of 2.01 µm, and 2500 rpm spin-coated thin film showed a thickness of 1.58 µm. Thus it is clearly shown that triboelectric active thin film obtained at a higher spin rate become smoother in terms of height and valley measurements.

In another approach, spray-coated films deposited over spin-coated films were evaluated to determine if surface roughness could be enhanced. The roughness of the thin film was observed to decrease when a spray-coated film was deposited over the spin-coated film using 15 passes. When 25 passes were used, a very smooth and continuous film was obtained. The surface roughness was found to be reduced by up to 70% when a film was spray-coated over the spin-coated film.

The results are summarized in Table 2. For the following samples, spin coating was conducted at 2500 rpm; spray coating was accomplished using 20 passes; and the spin coated-spray coated combination sample was obtained by spin coating at 2500 rpm, followed by 20 passes of spray coating. The concentration for spin coating and spray coating was 16 weight percent and 0.5 weight percent, respectively. The deposition rate was 0.1 milliliters per minute.

**Table 2**

| **Sample** | **Peak-to-valley (µm)** | **Roughness (µm)** | **Ra (µm)** |
|---|---|---|---|
| (a) Spin-coated | 15.80 | 2.48 | 2.13 |
| (b) Spray-coated* | 9.11 | 0.86 | 0.52 |
| (c) Spin over spray-coated | 13.53 | 1.81 | 1.30 |

| | | | |
|---|---|---|---|
| *From Example 3 | | | |

The results in Table 2 show that spray-coating resulted in smoother films and showed good control over surface roughness, with a low peak to valley (PV) value of below 1 µm. The spray-coating method was also effective to reduce the roughness of spin-coated thin films as well. In particular, spray-coating over the spin-coated film reduced the surface roughness from 2.48 µm to 1.81 µm

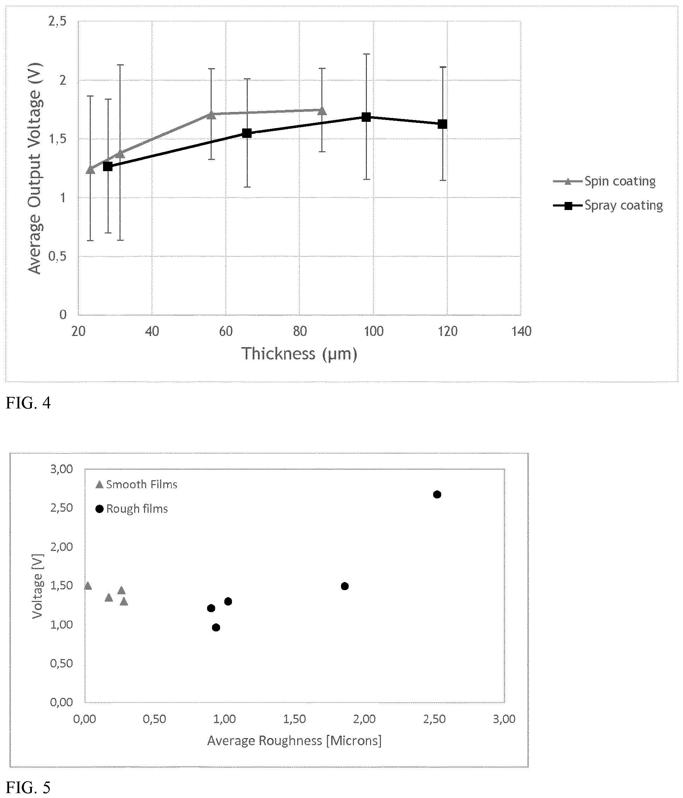

Each of the above-described thin films of Table 2 were characterized for their triboelectric performance by testing for triboelectric energy output. FIG. 4 shows the average output voltages for spin- and spray-coated triboelectric thin films at various thicknesses. In the case of spin-coating, the output increased with increasing thickness. The best average output voltage was 1.74 volts/Area observed at 80-micrometer average thickness. The average voltage output saturated after 60 micrometers. The spray-coated triboelectric thin films at low thickness showed lower performance, but after increasing the thickness, the triboelectric performance improved. Without wishing to be bound by theory, it is believed that as the number of passes increases, thicker films are produced with improving film quality and yielding continuous films. The average triboelectric voltage observed was 1.68 volts at an average thickness of 100 micrometers.

FIG. 5 shows that when the concentration of the PVDF-TrFE was held constant, a clear increase in average voltage output from 1.50 volts at a surface roughness value of 0.02 micrometers to 2.67 volts at a surface roughness value of 2.52 micrometers using the spray-coating technique. Thus it is clear that there is an increase in voltage with relation to an increase in thin film surface roughness.

### Example 5

In another example, the triboelectric thin film was coated with XPC-FPOSS solution described above using the spray-coating method. The formulation was prepared by dissolving XPC-FPOSS in cyclohexanone to provide a 1 weight percent solution. The solution was spray-coated onto an ITO/glass substrate using the following parameters: a deposit rate of 0.1 milliliters per minute; base temperature of 30°C; generator power of 1.3 watts; path distance of 2 millimeters; speed of 10 millimeters per second; and post-annealed at 65°C for 1.5 hours.

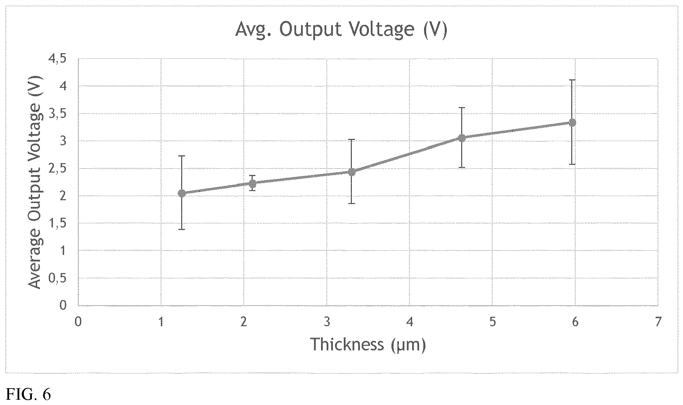

The spray-coated XPC-FPOSS films were characterized for triboelectric performance. A consistent touch event with a fixed force of 3.2 ± 0.5 newtons was applied to the triboelectric sensor, which was connected to an electrometer to measure the output voltage. The sensor was connected to an external resistor of 500 MΩ. The results are shown in FIG. 6, and clearly indicated that a dramatic increase of average voltage as the thin film thickness increases was observed. The results also suggest that the thickness of the film plays an insignificant role in effecting the overall performance of the triboelectric film. Without wishing to be bound by theory, it is believed that the XPC-FPOSS provides different results from the PVDF-TrFE because XPC-FPOSS has a higher electronegativity and lower surface energy. The fluorine moieties can migrate to the surface, resulting in a higher voltage output.

The examples presented herein demonstrate the influence of different factors on homogenous film formation by spray-coating. The present inventors have determined the critical parameters of the spray-coating process to achieve a continuous film with uniform thickness and low roughness. Solution processable spray-coating was shown to be effective to obtain continuous and smooth films. The thin films were also tested for triboelectric energy and it was found that the same or better results were achieved when compared to other processes. Furthermore, the triboelectric performance has been improved by one-step fabrication of pre-patterned electrodes using the spray-coating technique. By the methods presented herein, the lengthy steps of structuring an electrode layer by photolithography can be avoided.

This disclosure further encompasses the following aspects.
Aspect 1: A method for the manufacture of a triboelectric device, the method comprising spray-coating a solution comprising a triboelectrically active polymer on an electrode to form a triboelectric layer disposed on at least a portion of the electrode, wherein the triboelectrically active polymer is present in the solution in an amount of 0.05 to 1.5 weight percent, based on the total weight of the solution; and the spray-coating comprises at least 1 pass over the electrode at a deposition rate of the solution of 0.05 to 0.25 milliliters per minute.
Aspect 2: The method of aspect 1, wherein the triboelectrically active polymer is present in the solution in an amount of 0.1 to 1 weight percent, 0.2 to 1 weight percent, or 0.3 to 1 weight percent, or 0.3 to 0.7 weight percent each based on the total weight of the solution.
Aspect 3: The method of aspect 1 or 2, wherein the triboelectrically active polymer is poly(vinylidene fluoride), a copolymer of poly(vinylidene fluoride), poly(dimethyl siloxane), poly(methyl (meth)acrylate), polyvinylidene chloride, poly(tetrafluoroethylene), a fluorinated copolymer of poly(methyl (meth)acrylate), poly(p-xylylene), a fluorinated polyhedral oligomeric silsesquioxane-functionalized polycarbonate, or a combination thereof, preferably poly(vinylidene fluoride), poly(vinylidene fluoride-co-trifluoroethylene), a fluorinated polyhedral oligomeric silsesquioxane-functionalized polycarbonate, or a combination thereof.
Aspect 4: The method of any of aspects 1 to 3, wherein the solution comprises an amount of solvent effective to dissolve the triboelectrically active polymer, preferably wherein the solvent is cyclohexanone, tetrahydrofuran, or a combination thereof.
Aspect 5: The method of any of aspects 1 to 4, wherein the electrode comprises a substrate and an electrical conductor disposed on the substrate.
Aspect 6: The method of aspect 5 wherein the substrate is glass.
Aspect 7: The method of aspect 6, wherein the substrate is a polymer film, preferably a polycarbonate film, polyetherimide film, polyester film, polyimide film, polyether ether ketone film.
Aspect 8: The method of any of aspects 5 to 7, wherein the electrical conductor comprises indium tin oxide, electrically conductive metal nanowires, an electrically conductive polymer layer, electrically conductive nanoparticles, electrically conductive nanomeshes, or a combination thereof, preferably silver nanowires.
Aspect 9: The method of any of aspects 5 to 8, wherein the electrode is a patterned substrate, wherein the electrical conductor is disposed on the substrate in a pre-determined pattern.
Aspect 10: The method of any of aspects 5 to 9, the method further comprising spray-coating the conductor onto the substrate to form a pattern prior to spray-coating the solution comprising the triboelectrically active polymer.
Aspect 11: The method of any of aspects 1 to 10, wherein the spray-coating the solution comprises 1 to 30 passes over the electrode, or 1 to 25 passes over the electrode, or 5 to 25 passes over the electrode, or 15 to 25 passes over the electrode.
Aspect 12: A triboelectric device made by the method of any of aspects 1 to 11.
Aspect 13: The triboelectric device of aspect 12, wherein the triboelectric layer has an average thickness of 1 to 150 micrometers, or 20 to 140 micrometers.
Aspect 14: The triboelectric device of aspect 12 or 13, wherein the triboelectric layer has an average roughness of 0.1 to 2 micrometers.
Aspect 15: The triboelectric device of any of aspects 12 to 14, wherein the triboelectric device has an average output voltage of 1 to 2 volts.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. The term "combination thereof" as used herein includes one or more of the listed elements, and is open, allowing the presence of one or more like elements not named. In addition, it is to be understood that the described elements may be combined in any suitable manner in the various embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A method for the manufacture of a triboelectric device, the method comprising
spray-coating a solution comprising a triboelectrically active polymer on an electrode to form a triboelectric layer disposed on at least a portion of the electrode,
wherein
the triboelectrically active polymer is present in the solution in an amount of 0.05 to 1.5 weight percent, based on the total weight of the solution; and
the spray-coating comprises at least 1 pass over the electrode at a deposition rate of the solution of 0.05 to 0.25 milliliters per minute.

2. The method of claim 1, wherein the triboelectrically active polymer is present in the solution in an amount of 0.1 to 1 weight percent, 0.2 to 1 weight percent, or 0.3 to 1 weight percent, or 0.3 to 0.7 weight percent each based on the total weight of the solution.

3. The method of claim 1 or 2, wherein the triboelectrically active polymer is poly(vinylidene fluoride), a copolymer of poly(vinylidene fluoride), poly(dimethyl siloxane), poly(methyl (meth)acrylate), polyvinylidene chloride, poly(tetrafluoroethylene), a fluorinated copolymer of poly(methyl (meth)acrylate), poly(p-xylylene), a fluorinated polyhedral oligomeric silsesquioxane-functionalized polycarbonate, or a combination thereof, preferably poly(vinylidene fluoride), poly(vinylidene fluoride-co-trifluoroethylene), a fluorinated polyhedral oligomeric silsesquioxane-functionalized polycarbonate, or a combination thereof.

4. The method of any of claims 1 to 3, wherein the solution comprises an amount of solvent effective to dissolve the triboelectrically active polymer, preferably wherein the solvent is cyclohexanone, tetrahydrofuran, or a combination thereof.

5. The method of any of claims 1 to 4, wherein the electrode comprises a substrate and an electrical conductor disposed on the substrate.

6. The method of claim 5 wherein the substrate is glass.

7. The method of claim 6, wherein the substrate is a polymer film, preferably a polycarbonate film, polyetherimide film, polyester film, polyimide film, polyether ether ketone film.

8. The method of any of claims 5 to 7, wherein the electrical conductor comprises indium tin oxide, electrically conductive metal nanowires, an electrically conductive polymer layer, electrically conductive nanoparticles, electrically conductive nanomeshes, or a combination thereof, preferably silver nanowires.

9. The method of any of claims 5 to 8, wherein the electrode is a patterned substrate, wherein the electrical conductor is disposed on the substrate in a pre-determined pattern.

10. The method of any of claims 5 to 9, the method further comprising spray-coating the conductor onto the substrate to form a pattern prior to spray-coating the solution comprising the triboelectrically active polymer.

11. The method of any of claims 1 to 10, wherein the spray-coating the solution comprises 1 to 30 passes over the electrode, or 1 to 25 passes over the electrode, or 5 to 25 passes over the electrode, or 15 to 25 passes over the electrode.

12. A triboelectric device made by the method of any of claims 1 to 11.

13. The triboelectric device of claim 12, wherein the triboelectric layer has an average thickness of 1 to 150 micrometers, or 20 to 140 micrometers.

14. The triboelectric device of claim 12 or 13, wherein the triboelectric layer has an average roughness of 0.1 to 2 micrometers.

15. The triboelectric device of any of claims 12 to 14, wherein the triboelectric device has an average output voltage of 1 to 2 volts.
